# EUROPÄISCHE PATENTSCHRIFT

(11) **EP 3 578 424 B1**
(45) Veröffentlichungstag und Bekanntmachung des Hinweises auf die Patenterteilung: **11.11.2020**
(21) Anmeldenummer: 19178030.3
(22) Anmeldetag: 04.06.2019
(51) Int. Cl.: B60R 19/26, B60R 19/36, B60R 19/34, B62D 21/15

(54) **VERFAHREN ZUR EINSTELLUNG DER DEFORMATION EINES SICHERHEITSELEMENTS EINES FAHRZEUGS UND EIN ENTSPRECHENDES SICHERHEITSELEMENT**
METHOD FOR ADJUSTING THE DEFORMATION OF A SECURITY ELEMENT FOR A VEHICLE AND A CORRESPONDING SECURITY ELEMENT
PROCÉDÉ DE RÉGLAGE DE LA DÉFORMATION D'UN ÉLÉMENT DE SÉCURITÉ D'UN VÉHICULE ET ÉLÉMENT DE SÉCURITÉ CORRESPONDANT

(30) Priorität: 04.06.2018 DE 102018208723
(43) Veröffentlichungstag der Anmeldung: 11.12.2019
(73) Patentinhaber: Ford Global Technologies, LLC, Dearborn, MI 48126 (US)
(72) Erfinder: Bach, Aleksandar, 52072 Aachen (DE); Pasligh, Niels, 41239 Mönchengladbach (DE); Schröder, Kai-Uwe, 22417 Hamburg (DE); Lyssakow, Pawel, 52062 Aachen (DE); Jafarzadeh Aghdam, Nima, 52072 Aachen (DE)
(74) Vertreter: Dörfler, Thomas

(56) Entgegenhaltungen:
- EP-A2- 1 754 654
- DE-A1- 19 700 022

## Beschreibung

Die Erfindung betrifft ein Verfahren zur Einstellung der Deformation eines Sicherheitselements eines Fahrzeugs, insbesondere eines Kraftfahrzeugs, wobei das Sicherheitselement ein Crashelement und einem Längsträger aufweist, wobei das Crashelements in Aufprallrichtung vor dem Längsträger zur Aufnahme einer im wesentlichen axialen Aufprall-Kraft ausgestaltet ist, und ein entsprechendes Sicherheitselement.

Der Einsatz von Sicherheitselementen sowie von Crashboxen oder allgemein Crashelementen bei Fahrzeugen, insbesondere Kraftfahrzeugen, ist bekannt.

Bei einem Auffahrunfall wird durch Deformation von Werkstoffen innerhalb der Crashbox Bewegungsenergie abgebaut, um die Fahrzeuginsassen und den gesamten Aufbau einer geringeren Verzögerungskraft auszusetzen. Dadurch sollen unzulässige Deformationen am Aufbau (welche mitunter einen Totalschaden bedeuten können) und Verletzungen der Insassen verhindert werden. Crashboxen werden für Kollisionen bis zu einer bestimmten Aufprallgeschwindigkeit z. B. von 15 km/h ausgelegt. Sie können nach einem Unfall mit relativ geringen Kosten ausgetauscht werden.

Die steigenden Sicherheitsanforderungen, insbesondere für den Frontal- und Seitenaufprall von Personenkraftwagen haben einen hohen Einfluss auf die Auslegung der Fahrzeugstruktur. Während des Aufpralls wird, wie beschrieben, die kinetische Energie des Fahrzeugs in Form von plastischer Deformation im Crashelement abgebaut.
Bei einem Frontalaufprall bestimmt der Beulablauf die Energieabsorption im Fahrzeug bzw. im Crashelement und somit die Sicherheit beim Aufprall. Um die Sicherheit von Fahrzeuginsassen zu gewährleisten, eine wirtschaftliche Reparatur zu ermöglichen und um ein wirtschaftliches Design zu erzielen ist es gewünscht diese Faltsequenz (Beulablauf) beeinflussen zu können.

Das Falten der Crashelemente in Fahrzeugen hängt von deren Geometrie, dem verwendeten Material und der Aufprallgeschwindigkeit ab. Um bei mehreren hintereinander geschalteten Strukturen die Faltsequenz zu beeinflussen, müssen die Crashelemente entsprechend so ausgelegt werden, dass das gewünschte Versagen bzw. die Faltsequenz zum gezielten Energieabbau auftreten kann. Um eine hohe Energieabsorption beim Aufprall im Fahrzeug und eine wirtschaftliche Reparatur zu ermöglichen soll das Crashelement bzw.

die Crashbox sich als erstes bzw. vor dem Längsträger falten. Ein Verfahren nach dem Oberbegriff des Anspruchs 1 sowie ein Sicherheitselement nach dem Oberbegriff des Anspruchs 7 sind aus DE19700022 A1 bekannt.

Aus der DE 10 2007 012 962 B4 ist eine Sicherheitseinrichtung für ein Kraftfahrzeug bekannt, bei welchem zwischen einem Stoßfängerquerträger und einem Längsträger ein bei einem Anprall in den Längsträger hinein verlagerbares Deformationselement angeordnet ist, wobei dem Deformationselement ein Aktuator zugeordnet ist, der dafür vorgesehen ist, die Verlagerung des Deformationselements in den Längsträger hinein in einem festgelegten Geschwindigkeitsbereich freizugeben und bei Über- oder Unterschreiten des Geschwindigkeitsbereichs die Verlagerung des Deformationselements in den Längsträger hinein zu blockieren. Dazu ist das Deformationselement ein umstülpbarer Rohrkörper ist, dessen an dem Längsträger angeordnetes hinteres Ende kragenartig nach außen umgestülpt ist, wobei das umgestülpte, hintere Ende fest mit einem Widerlagerring verbunden ist, welcher von dem Aktuator gegenüber dem Längsträger blockierbar oder freigebbar ist.

US 5,732,801 A offenbart ebenfalls ein rohrförmiges Deformationselement, bei dem das Rohr mit einem gestanzten Muster, das ein Knicken des Rohrs beim Zusammendrücken bestimmt. Eine Ausführungsform betrifft ein in axialer Richtung zweiteiliges Rohr, wobei zwischen den Teilen eine Membran ("diaphragm") angeordnet ist, um ein Ausbreiten der Rohraufweitung von einem Teil in das nächste zu verhindern.

WO 2015/150656 A1 beschreibt eine Vorderstruktur eines Kraftfahrzeugs mit zwei Längsstrukturprofilen, zwei verformbare Profilabschnitten, Mittel zum Befestigen der verformbaren Profilabschnitte an den entsprechenden strukturellen Profilabschnitten und eine gekrümmte Querstrebe, die an den vorderen Enden der verformbaren Profilabschnitte befestigt ist. Die Mittel zum Befestigen eines der verformbaren Profilabschnitte an dem entsprechenden strukturellen Profilabschnitt sind so konfiguriert, dass sie eine Querbewegung des verformbaren Profilabschnitts in Richtung Außenseite des hinteren Endes relativ zu dem Strukturprofilabschnitt ermöglichen, so dass im Falle eines Aufpralls auf den gekrümmten Träger, eine seitliche Verformung des vorderen Endes des entsprechenden Strukturprofilabschnitts nach außen erzeugt wird.

Demgegenüber besteht die Aufgabe der vorliegenden Erfindung darin, ein Verfahren zur Einstellung der Deformation eines Crashelements eines Fahrzeugs und ein entsprechendes Crashelement bereitzustellen, bei dem die Reihenfolge der Deformation festlegbar ist.

Diese Aufgabe wird durch das in Anspruch 1 wiedergegebene Verfahren bzw. das in Anspruch 7 angegebene Sicherheitselement gelöst. Vorteilhafte Ausgestaltungen ergeben sich aus den Unteransprüchen und der Beschreibung.

Erfindungsgemäß ist erkannt worden, dass wenn zwischen Crashelement und Längsträger ein Schockwellentransmitter angeordnet wird, der je nach Ausgestaltung einen Anteil einer durch den Aufprall entstehenden Schockwelle in das Crashelement zurück reflektiert und einen anderen Anteil der Schockwelle in den Längsträger durchlässt, es möglich ist, das Deformationsverhalten des Sicherheitselements zu steuern. So kann die Reihenfolge der Deformation, d.h. z.B. Crashelement vor Längsträger, und das Faltverhalten des Crashelements und/oder des Längsträgers eingestellt werden.

Mit Schockwellen sind vorliegend keine Wellen gemeint, die sich in einem Fluid ausbreiten, sondern Impulswellen, die sich in Folge eines starken Aufschlags innerhalb einer Struktur ausbreiten - analog zu Körperschall - wie dies auch in der US 2018/0100519 A1 im Absatz [0004] beschrieben ist.

Bei dem Schockwellen-Transmitter handelt es sich im Wesentlichen um eine Umsetzung eines Impedanz-Sprunges durch nacheinander platzierte unterschiedliche Materialien, innerhalb derer die akustische Impedanz (Schallgeschwindigkeit x Dichte) unterschiedlich ist.

An diesem Impedanz-Sprung werden die Schockwellen bzw. Impulswellen reflektiert oder durchgelassen. Die erfolgt in etwa analog zu beispielsweise Ultraschall-Körperschallwellen in der Ultraschalldiagnostik (siehe z.B. https://praktikum.physik.unibremen.de/fileadmin/Physika/Versuche/FortgeschrittenenPraktikum/Anleitung/fp12_Ultrasch all_02_12_08.pdf - Seite 2 "Reflexion und Transmission an Grenzflächen").

Im Grunde ist der Schockwellentransmitter also ein Segment zur gezielten Reflexion/ Transmission der Impulswellen in einem Bauteil. Er ist also mit anderen Worten ein Impulswellenmodulator, der je nach Ausgestaltung die Wellen komplett reflektiert, komplett durchlässt oder teilweise reflektiert bzw. durchlässt.

Durch Überlagerung einer vorhanden Impulswelle im Bauteil bzw. deren Reflexionen wird in einem Bereich des Bauteils eine kritische Belastung überschritten, die dann zum Beulen dieser Zone führt. Durch gezielte Auslegung und Wahl von Werkstoffen und Reflexions- bzw. Transmissionspunkte kann so gesteuert werden, welcher Bereich zuerst beult oder sich verformt.

Ein wesentlicher Einflussfaktor bleibt jedoch auch die Geometrie des Bauteils.
In der Auslegung ist somit die Position des Transmitters (Modulators) zu beeinflussen und in welchem Maße dieses Bauteile Reflektiert bzw. Transmittiert. Mit einer Berechnung kann die Wellenausbreitung abgeschätzt werden und die Stelle, an welcher diese einen kritischen Wert zuerst erreicht abgeschätzt werden.

Dadurch kann wiederum die Fahrzeugstruktur so ausgelegt werden, dass sie an der gewünschten Stelle versagt (Sollbruchstelle). Dies ermöglicht es, einerseits die Sicherheit der Passgiere einzuhalten und andererseits eine wirtschaftliche Reparatur durchzuführen.

Es ist sinnvoll, den durch den Schockwellentransmitter bewirkten Impedanz-Sprung genau einzustellen, um das Beulverhalten zu stabilisieren. Die Einstellmöglichkeiten werden durch die Wahl der Werkstoffe vorgegeben (Dichte/ E-Modul). Durch die gezielte Auslegung des Impedanz-Sprunges kann die Schädigung bzw. Deformation des Längsträgers oder Crashelement optimiert werden.

Die Auslegung des Längsträgers kann nicht nur durch den Impedanz-Sprung reguliert werden, sondern auch durch die Länge der zwei Strukturen (Crashelement und Längsträger) und die Dicke der Platte (Schockwellentransmitter) zwischen den Strukturen. Je Länger das Crashelement oder der Längsträger, desto länger die Zeit bis zur Reflexion bzw. Transmission. So können z. B. Strukturen verschiedener Länge zum gewünschten Deformationsmuster führen.

Wie oben dargestellt, ist es festgestellt worden, dass das Verhalten des Schockwellentransmitters sich auch durch eine geeignete Materialauswahl einstellen lässt. So kann der Betrag der Spannung, der transmittiert bzw. durchgelassen und reflektiert wird, gezielt beeinflusst bzw. vorgeben werden. Insbesondere kann die Materialauswahl auf der Dichte und/oder dem Elastizitätsmodul des Materials beruhen, da diese maßgeblich sind.

Als Material für den Schockwellentransmitter sind insbesondere Stahl und Aluminium geeignet. Da dessen Verhalten im Wesentlichen von Dichte und E-Modul beeinflusst ist, spielt die konkrete Legierung eine untergeordnete Rolle.
Als Materialstärke kommt eine Dicke von etwa 0,5 bis 4 mm, insbesondere ca. 2 mm in Frage.

Auch der Einsatz von Hybridplatten aus z.B. Kunststoffbeschichteten Metallen ist möglich.

Kontakt-Korrosion kann bei einer Stahl-/AI-Kombination z.B. durch Hybridplatten oder mit einer Beschichtung (E-coating) des Schockwellentransmitters verhindert werden.

Zusätzlich ist festgestellt worden, dass es möglich ist, das Reflektions- bzw. Transmissionsverhalten des Materials des Schockwellentransmitters aktiv veränderbar auszugestalten.

So kann für den Schockwellentransmitter ein Material ausgewählt werden, dessen Reflektions- bzw. Transmissionsverhalten, z.B. durch Veränderung der Dichte und/oder des Elastizitätsmoduls, durch eine Veränderung einer angelegten Spannung, eines äußeren Magnetfelds oder eines aufgebrachten Drucks auf Wunsch geändert werden kann.

Das Material kann z.B. eine Formgedächtnislegierung, ein piezoelektrisches Polymer oder ein magnetorheologisches Material sein. Insbesondere kann ein Material ausgewählt werden, das aktiv in seiner Steifheit veränderbar ist.

Bei einem so aktiv veränderbaren Material ist es sinnvoll, diese Eigenschaft mit der Aufprallgeschwindigkeit des Fahrzeugs zu verändern, um je nach Bereich der Aufprallgeschwindigkeit eine Änderung des Verhaltens des Schockwellentransmitters und somit des Sicherheitselements zu erreichen.

Dazu können die Fahrzeugsensoren über eine Fahrzeugsteuerung, z.B. Bordcomputer, ECU etc, die Parameter gezielt ändern, z.B. den die anliegende Spannung am Schockwellentransmitter variieren.

Der Schockwellentransmitter ist vorzugsweise zwischen Set-plate (Crashbox seitig) und Mounting-plate (Längsträger seitig) angebracht. Typischerweise ist die Verbindung geschraubt, da ein partieller Austausch des Crashmanagement-Systems vorgesehen ist.

Ferner kann auch ein asymmetrischer Aufbau bezogen auf das Fahrzeug gewählt werden (linker Längsträger anders gestaltet als rechter Längsträger), die Längsträger Infolge der Motorlager meist nicht symmetrisch ausgeführt sind und daher andere Knicklasten aufweisen. Mit anderen Worten, es können unterschiedliche Schockwellentransmitter pro Längsträger bzw. Sicherheitselement verwendet werden.

Weitere Details der Erfindung ergeben sich aus der nachfolgenden Beschreibung von Ausführungsbeispielen anhand der Zeichnung, in der
- Fig. 1: eine schematische Seitenansicht eines klassischen Sicherheitselements in einem Fahrzeug;
- Fig. 2: eine schematische Seitenansicht eines erfindungsgemäßen Sicherheitselements;
- Fig. 3: eine schematische Ansicht einer vorderen Stoßfänger-Fahrzeugstruktur mit erfindungsgemäßen Sicherheitselementen.

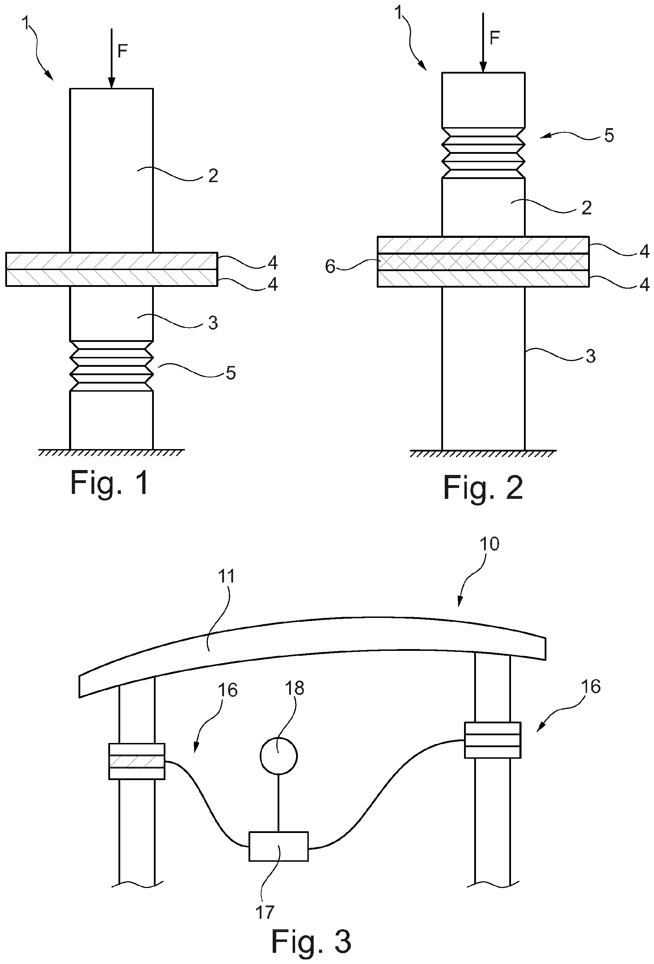

In den Figuren 1 ist ein als Ganzes mit 1 bezeichnetes Sicherheitselement dargestellt.

Das Sicherheitselement 1 umfasst eine in Fahrrichtung vordere Crashbox 2 und ein dahinter angeordnetes Längsprofil 3. Die Crashbox 2 und das Längsprofil 3 sind über Anbindungsplatten 4 (Flansche) miteinander fest verbunden. Das Längsprofil 3 ist fest im Fahrzeug verankert.

Wirkt nun eine im wesentlichen axiale Aufprallkraft F auf die Crashbox 2 ein, so wird die gesamte Struktur 1 gestaucht und es entsteht dabei eine Deformation 5.

In dem dargestellten klassischen Beispiel kann es zur Stauchung bzw. Deformation und Faltung im Bereich des Längsprofils 3 kommen.

Dies ist nicht erwünscht, da eigentlich gewünscht ist, dass die Crashbox 2 zuerst deformieren soll.

Um dies zu unterstützen, ist erfindungsgemäß vorgesehen, dass zwischen den Anbindungsplatten 4 ein Schockwellentransmitter 6 angeordnet ist, der als Impulswellenmodulator wirkt und durch die Materialauswahl einen Impedanz-Sprung bewirkt.

Dieser ist aus einem anderen Material, nämlich Aluminium mit einer Stärke von 2 mm hergestellt, als die Crashbox 2 bzw. das Längsprofil 3 aus Stahl hergestellt. Um eine Kontaktkorrosion zu verhindern, ist der Schockwellentransmitter 6 kunststoffbeschichtet.

Vorliegend sind die Teile durch eine Klemm-Verschraubung miteinander befestigt. Denkbar wäre auch eine Verbindung durch andere Verfahren, wie z.B. Schutzgasschweißen.

Der am Schockwellentransmitter 6 auftretende und gezielt eingestellte Impedanz-Sprung durch die unterschiedlichen Materialien der Crashbox 2, des Längsprofils 3 und des Schockwellentransmitters 6 selbst bewirkt, dass die durch die auf die Crashbox 2 einwirkende Aufprallkraft F erzeugten Schockwellen bzw. Impulswellen nur teilweise in das Längsprofil 3 durchgelassen wird und die Impulswellen so reflektiert werden, dass nun die Crashbox 2 eine Deformation 6 durchläuft, da dort eine kritische Belastung überschritten wird.

Somit kann zusätzlich zu strukturellen Eigenschaften sichergestellt werden, dass tatsächlich die Crashbox wie gewollt zuerst deformiert, um Energie umzuwandeln.

Auch kann durch den Schockwellentransmitter 6 beeinflusst werden, wie die Deformation 5 bzw. Faltung abläuft, um z.B. die bevorzugte Reihenfolge einer Faltung zu erhalten und nicht einen Knick.

In der Figur 3 ist ein solches Sicherheitselement 1 in einer vorderen Stoßfänger-Fahrzeugstruktur 10 jeweils links und rechts (in Fahrtrichtung) hinter einem vorderen, gebogenen Querträger 11 angeordnet.

Jedes Sicherheitselement 1 umfasst, wie oben dargestellt, eine Schockwellentransmitter 16.

Im Unterschied zu soeben, besteht dieser Schockwellentransmitter 16 aus einem piezoelektrischen Material, das durch eine angelegte Spannung in seinem Reflektions- und Transmissionsverhalten einstellen lässt. Somit lässt sich der Impedanz-Sprung gezielt verändern.

Dazu ist der jeweilige Schockwellentransmitter 16 an einen Bordcomputer 17 angeschlossen, der die angelegte Spannung anhand der Geschwindigkeit steuert, wozu dieser mit entsprechender Geschwindigkeitssensorik 18 gekoppelt ist.

So kann bei niedrigen Geschwindigkeiten der Schockwellentransmitter 16 auf Reflektion getrimmt werden, sodass im Wesentlichen die Crashbox 2 deformiert wird.

## Patentansprüche

1. Verfahren zur Einstellung der Deformation eines Sicherheitselements (1) eines Kraftfahrzeugs, wobei das Sicherheitselement (1) ein Crashelement (2) und einen Längsträger (3) aufweist, wobei das Crashelement (2) in Aufprallrichtung vor dem Längsträger (3) zur Aufnahme einer im wesentlichen axialen Aufprall-Kraft (F) angeordnet und ausgestaltet ist, **dadurch gekennzeichnet, dass** zwischen Crashelement (2) und Längsträger (3) ein Schockwellentransmitter (6) angeordnet wird, bei dem es sich im Wesentlichen um ein Segment zur gezielten Reflexion oder Transmission der Impulswellen in einem Bauteil durch eine Umsetzung eines Impedanz-Sprunges durch nacheinander platzierte unterschiedliche Materialien handelt, innerhalb derer die akustische Impedanz unterschiedlich ist, so dass je nach Ausgestaltung ein Anteil einer durch den Aufprall entstehenden Schockwelle bzw. Impulswelle in das Crashelement (2) zurück reflektiert und einen anderen Anteil der Schockwelle bzw. Impulswelle in den Längsträger (3) durchgelassen wird.

2. Verfahren nach Anspruch 1, **dadurch gekennzeichnet, dass** der am Schockwellentransmitter (6) auftretende Impedanz-Sprung durch eine geeignete Materialauswahl des Crashelements (2), des Längsträgers (3) und des Schockwellentransmitters (6) selbst eingestellt wird.

3. Verfahren nach Anspruch 2, **dadurch gekennzeichnet, dass** die Materialauswahl des Schockwellentransmitters (6) auf der Dichte und/oder dem Elastizitätsmodul des Materials beruht.

4. Verfahren nach Anspruch 2 oder 3, **dadurch gekennzeichnet, dass** das Reflektions- bzw. Transmissionsverhalten des Materials des Schockwellentransmitters (6) aktiv veränderbar ist.

5. Verfahren nach Anspruch 4, **dadurch gekennzeichnet, dass** Material ein aktiv veränderbares Material ist, wie eine Formgedächtnislegierung, ein piezoelektrisches Polymer oder ein magnetorheologisches Material ist, das aktiv in seiner Steifheit veränderbar ist.

6. Verfahren nach Anspruch 4 oder 5, dass das Reflektions- und Transmissionsverhalten des Materials anhand der Geschwindigkeit des Fahrzeugs beim Aufprall aktiv eingestellt wird bzw. veränderbar ist.

7. Sicherheitselement (1) eines Kraftfahrzeugs, wobei das Sicherheitselement (1) ein Crashelement (2) und einen Längsträger (3) aufweist, wobei das Crashelement (2) in Aufprallrichtung vor dem Längsträger (3) zur Aufnahme einer im wesentlichen axialen Aufprall-Kraft (F) angeordnet und ausgestaltet ist, **dadurch gekennzeichnet, dass** zwischen Crashelement (2) und Längsträger (3) ein Schockwellentransmitter (6) angeordnet ist, bei dem es sich im Wesentlichen um ein Segment zur gezielten Reflexion oder Transmission der Impulswellen in einem Bauteil durch eine Umsetzung eines Impedanz-Sprunges durch nacheinander platzierte unterschiedliche Materialien handelt, innerhalb derer die akustische Impedanz unterschiedlich ist, wobei der am Schockwellentransmitter (6) auftretende Impedanz-Sprung durch eine geeignete Materialauswahl des Crashelements (2), des Längsträgers (3) und des Schockwellentransmitters (6) selbst eingestellt wird.

8. Sicherheitselement nach Anspruch 7, **dadurch gekennzeichnet, dass** das Material des Schockwellentransmitters (6) ein aktives Verändern des Reflektions- und Transmissionsverhaltens erlaubt.

9. Sicherheitselement nach Anspruch 8, **dadurch gekennzeichnet, dass** das Material eine Formgedächtnislegierung, ein piezoelektrisches Polymer oder ein magnetorheologisches Material ist, das aktiv in seiner Steifheit veränderbar ist.

10. Sicherheitselement nach Anspruch 8 oder 9, dass das Reflektions- und Transmissionsverhalten des Materials anhand der über Geschwindigkeitssensoren des Fahrzeugs beim Aufprall eingestellt wird, wozu der Schockwellentransmitter (6) mit einer Fahrzeugsteuerung (17) verbunden ist.

## Claims

1. Method for adjusting the deformation of a safety element (1) of a motor vehicle, wherein the safety element (1) has a crash element (2) and a longitudinal carrier (3), wherein the crash element (2) in the impact direction is arranged and constructed in front of the longitudinal carrier (3) in order to absorb a substantially axial impact force (F), **characterized in that** between the crash element (2) and the longitudinal carrier (3) there is arranged a shockwave transmitter (6) which is substantially a segment for the targeted reflection or transmission of the impulse waves in a component by converting a jump in impedance by successively placed dissimilar materials, the acoustic impedance being dissimilar within said materials such that, depending on the construction, a proportion of the shockwaves or impulse waves, respectively, created by the impact are reflected back into the crash element (2) and another proportion of the shockwaves or impulse waves, respectively, are allowed to pass through into the longitudinal carrier (3).

2. Method according to Claim 1, **characterized in that** the jump in impedance which arises at the shockwave transmitter (6) is adjusted by an appropriate material selection of the crash element (2), of the longitudinal carrier (3), and of the shockwave transmitter (6) per se.

3. Method according to Claim 2, **characterized in that** the material selection of the shockwave transmitter (6) is based on the density and/or the elasticity modulus of the material.

4. Method according to Claim 2 or 3, **characterized in that** the reflective or transmissive behaviour, respectively, of the material of the shockwave transmitter (6) is actively variable.

5. Method according to Claim 4, **characterized in that** the material is an actively variable material such as a shape-memory alloy, a piezoelectric polymer, or a magnetorheological material which is able to be actively varied in terms of its rigidity.

6. Method according to Claim 4 or 5, **characterized in that** the reflective and transmissive behaviour of the material is actively adjusted, or is actively variable, respectively, during the impact by means of the speed of the vehicle.

7. Safety element (1) of a motor vehicle, wherein the safety element (1) has a crash element (2) and a longitudinal carrier (3), wherein the crash element (2) in the impact direction is arranged and constructed in front of the longitudinal carrier (3) in order to absorb a substantially axial impact force (F), **characterized in that** between the crash element (2) and the longitudinal carrier (3) there is arranged a shockwave transmitter (6) which is substantially a segment for the targeted reflection or transmission of the impulse waves in a component by converting a jump in impedance by successively placed dissimilar materials, the acoustic impedance being dissimilar within said materials, wherein the jump in impedance which arises at the shockwave transmitter (6) is adjusted by an appropriate material selection of the crash element (2), of the longitudinal carrier (3), and of the shockwave transmitter (6) per se.

8. Safety element according to Claim 7, **characterized in that** the material of the shockwave transmitter (6) permits the reflective and transmissive behaviour to be actively varied.

9. Safety element according to Claim 8, **characterized in that** the material is a shape-memory alloy, a piezoelectric polymer, or a magnetorheological material which is able to be actively varied in terms of its rigidity.

10. Safety element according to Claim 8 or 9, **characterized in that** the reflective and transmissive behaviour of the material is adjusted during the impact by means of via speed sensors of the vehicle, to which end the shockwave transmitter (6) is connected to a vehicle control unit (17).

## Revendications

1. Procédé de réglage de la déformation d'un élément de sécurité (1) d'un véhicule automobile, l'élément de sécurité (1) comportant un élément de collision (2) et un longeron (3), l'élément de collision (2) étant disposé en avant du longeron (3) dans la direction de l'impact et étant conçu pour absorber une force d'impact (F) sensiblement axiale, **caractérisé en ce qu'**un transmetteur d'ondes de choc (6) est disposé entre l'élément de collision (2) et le longeron (3), lequel transmetteur est sensiblement un segment destiné à la réflexion ou la transmission ciblée des ondes d'impulsion dans un composant par conversion d'un saut d'impédance à travers différents matériaux qui sont placés les uns après les autres et dans lesquels l'impédance acoustique est différente de sorte que, selon la conception, une partie d'une onde de choc ou d'une onde d'impulsion résultant de l'impact est rétro-réfléchie jusque dans l'élément de collision (2) et une autre partie de l'onde de choc ou de l'onde d'impulsion est transmise dans le longeron (3).

2. Procédé selon la revendication 1, **caractérisé en ce que** le saut d'impédance survenant au niveau du transmetteur d'ondes de choc (6) est réglé par une sélection appropriée des matériaux de l'élément de collision (2), du longeron (3) et du transmetteur d'onde de choc (6) lui-même.

3. Procédé selon la revendication 2, **caractérisé en ce que** la sélection du matériau du transmetteur d'onde de choc (6) est basée sur la densité et/ou le module d'élasticité du matériau.

4. Procédé selon la revendication 2 ou 3, **caractérisé en ce que** le comportement de réflexion ou de transmission du matériau du transmetteur d'ondes de choc (6) peut être modifié de manière active.

5. Procédé selon la revendication 4, **caractérisé en ce que** le matériau est un matériau modifiable de manière active, tel qu'un alliage à mémoire de forme, un polymère piézoélectrique ou un matériau magnétorhéologique, dont la rigidité peut être modifiée de manière active.

6. Procédé selon la revendication 4 ou 5, **caractérisé en ce que** le comportement de réflexion et de transmission du matériau est réglé ou peut être modifié de manière active en fonction de la vitesse du véhicule lors de l'impact.

7. Élément de sécurité (1) d'un véhicule automobile, l'élément de sécurité (1) comportant un élément de collision (2) et un longeron (3), l'élément de collision (2) étant disposé en avant du longeron (3) dans la direction d'impact et conçu pour recevoir une force d'impact (F) sensiblement axiale, **caractérisé en ce qu'**un transmetteur d'ondes de choc (6) est disposé entre l'élément de collision (2) et le longeron (3), lequel transmetteur est sensiblement un segment destiné à la réflexion ou la transmission ciblée des ondes d'impulsion dans un composant par conversion d'un saut d'impédance à travers différents matériaux placés les uns après les autres dans lesquels l'impédance acoustique est différente, le saut d'impédance qui survient au niveau du transmetteur d'ondes de choc (6) étant réglé par une sélection appropriée des matériaux de l'élément de collision (2), du longeron (3) et du transmetteur d'onde de choc (6) lui-même.

8. Elément de sécurité selon la revendication 7, **caractérisé en ce que** le matériau du transmetteur d'ondes de choc (6) permet de modifier de manière active le comportement de réflexion et de transmission.

9. Elément de sécurité selon la revendication 8, **caractérisé en ce que** le matériau est un alliage à mémoire de forme, un polymère piézoélectrique ou un matériau magnétorhéologique dont la rigidité peut être modifiée de manière active.

10. Elément de sécurité selon la revendication 8 ou 9, **caractérisé en ce que** le comportement de réflexion et de transmission du matériau est réglé par le biais de par capteurs de vitesse du véhicule lors de l'impact, ce pour quoi le transmetteur d'onde de choc est relié à une commande de véhicule (17).
